# EUROPEAN PATENT APPLICATION

(11) **EP 4 421 600 A1**
(43) Date of publication of application: **28.08.2024**
(21) Application number: 22882719.2
(22) Date of filing: 12.10.2022
(51) Int. Cl.: G06F 3/0481

(54) **DISPLAY METHOD AND APPARATUS, ELECTRONIC DEVICE, AND READABLE STORAGE MEDIUM**

(30) Priority: 19.10.2021 CN 202111214617
(71) Applicant: Vivo Mobile Communication Co., Ltd., Dongguan, Guangdong 523863 (CN)
(72) Inventor: ZHAO, Qian, Dongguan, Guangdong 523863 (CN)
(74) Representative: Lavoix
(86) International application number: PCT/CN2022/124884
(87) International publication number: WO 2023/066109

(57) **Abstract**

This application discloses a display method and apparatus, an electronic device, and a readable storage medium and pertains to the field of mobile terminal technologies. The method includes: displaying a first user interface; receiving a first input performed by a user; in response to the first input, displaying a first task window and displaying a first task sign in the first task window, the first task sign being associated with the first user interface, where the first task window further includes a second task sign, the second task sign being associated with a second user interface; and displaying the second user interface in a case that a second input performed on the second task sign has been received.

## Description

### CROSS-REFERENCE TO RELATED APPLICATIONS

This application claims priority to Chinese Patent Application No. 202111214617.X filed in China on October 19, 2021, which is incorporated herein by reference in its entirety.

### TECHNICAL FIELD

This application pertains to the field of communication technologies and specifically relates to a display method and apparatus, an electronic device, and a readable storage medium.

### BACKGROUND

In daily life, people often need to simultaneously handle multiple tasks within a certain period of time, for example, taking notes, looking up a word in the dictionary, surfing the Internet, and the like while attending an online class. The demand for flexible switching between multiple tasks is becoming increasingly strong among users.

In current terminal devices (for example, mobile phones), the method of switching recent tasks is as follows: In a case of a mobile phone currently displaying an interface of application A, a user performs a first operation to trigger the display of a background task interface on the mobile phone. Tasks of at least two applications running in the background are displayed on this background task interface. The user selects a task of application B in the background interface to switch from the currently displayed interface of the mobile phone to the interface of application B.

It can be learned from the above that in the process of switching between recent tasks in the related art, it is necessary to exit a current application program interface, which leads to poor user experience. Additionally, users cannot conveniently switch back and forth between two or more application program interfaces.

### SUMMARY

Embodiments of this application are intended to provide a display method and apparatus, an electronic device, and a readable storage medium, to solve the problem that users cannot conveniently switch back and forth between two or more application program interfaces in the related art.

To solve the foregoing technical problem, this application is implemented as follows.

According to a first aspect, an embodiment of this application provides a display method. The method includes:
displaying a first user interface;
receiving a first input performed by a user;
in response to the first input, displaying a first task window and displaying a first task sign in the first task window, the first task sign being associated with the first user interface, where the first task window further includes a second task sign, the second task sign being associated with a second user interface; and
displaying the second user interface in a case that a second input performed on the second task sign has been received.

According to a first aspect, an embodiment of this application provides a display apparatus including:
a first display module configured to display a first user interface;
a first receiving module configured to receive a first input performed by a user;
a second display module configured to: in response to the first input, display a first task window and display a first task sign in the first task window, the first task sign being associated with the first user interface, where the first task window further includes a second task sign, the second task sign being associated with a second user interface; and
a third display module configured to display the second user interface in a case that a second input performed on the second task sign has been received.

According to a third aspect, an embodiment of this application provides an electronic device, where the electronic device includes a processor, a memory, and a program or instructions stored in the memory and capable of running on the processor, and when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

In the embodiments of this application, the first user interface is displayed; the first input performed by a user is received; in response to the first input, the first task window is displayed and the first task sign is displayed in the first task window, the first task sign being associated with the first user interface, where the first task window further includes the second task sign, the second task sign being associated with the second user interface; and the second user interface is displayed in a case that the second input performed on the second task sign has been received. In this way, in a case that the first user interface is displayed, the second user interface can be conveniently viewed by performing an operation on the second task sign in the first task window, simplifying the process of waking up the second user interface in a case that the first user interface is displayed.

### BRIEF DESCRIPTION OF DRAWINGS

FIG. 1 is a flowchart of a display method according to an embodiment of this application;
FIG. 2a is a first schematic interface diagram of a display method in a first application scenario according to an embodiment of this application;
FIG. 2b is a second schematic interface diagram of a display method in a first application scenario according to an embodiment of this application;
FIG. 2c is a third schematic interface diagram of a display method in a first application scenario according to an embodiment of this application;
FIG. 2d is a fourth schematic interface diagram of a display method in a first application scenario according to an embodiment of this application;
FIG. 3a is a first schematic interface diagram of a display method in a second application scenario according to an embodiment of this application;
FIG. 3b is a second schematic interface diagram of a display method in a second application scenario according to an embodiment of this application;
FIG. 4a is a first schematic interface diagram of a display method in a third application scenario according to an embodiment of this application;
FIG. 4b is a second schematic interface diagram of a display method in a third application scenario according to an embodiment of this application;
FIG. 5a is a first schematic interface diagram of a display method in a fourth application scenario according to an embodiment of this application;
FIG. 5b is a second schematic interface diagram of a display method in a fourth application scenario according to an embodiment of this application;
FIG. 6 is a flowchart of another display method according to an embodiment of this application;
FIG. 7 is a schematic structural diagram of a display apparatus according to an embodiment of this application;
FIG. 8 is a schematic structural diagram of an electronic device according to an embodiment of this application; and
FIG. 9 is a schematic structural diagram of another electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first", "second", and the like are typically used to distinguish between objects of a same type but do not limit the quantity of the objects. For example, there may be one or more first objects. In addition, "and/or" in the specification and claims represents at least one of connected objects, and the character "/" generally indicates that the contextually associated objects have an "or" relationship.

The display method, display apparatus, electronic device, and readable storage medium provided in the embodiments of this application are hereinafter described in detail by using specific embodiments and application scenarios thereof with reference to the accompanying drawings.

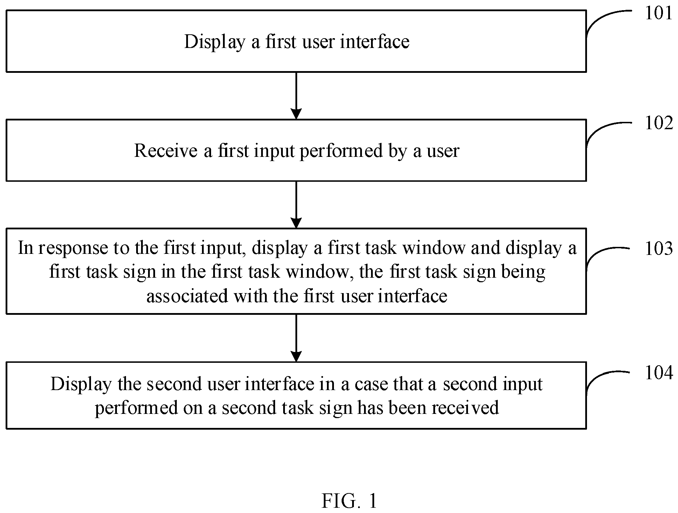

Referring to FIG. 1, the display method provided in an embodiment of this application may include the following steps.

Step 101. Display a first user interface.

In specific implementation, the first user interface may be an interface of any application program or a split-screen interface of interfaces of at least two application programs set by a user. This is not specifically limited herein.

Step 102. Receive a first input performed by the user.

Step 103. In response to the first input, display a first task window and display a first task sign in the first task window, the first task sign being associated with the first user interface, where the first task window further includes a second task sign, the second task sign being associated with a second user interface.

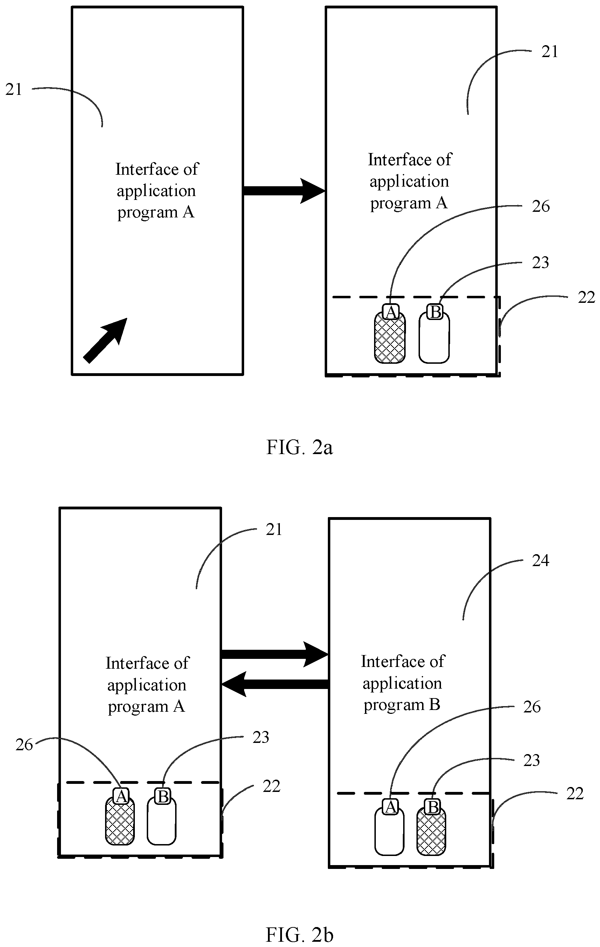

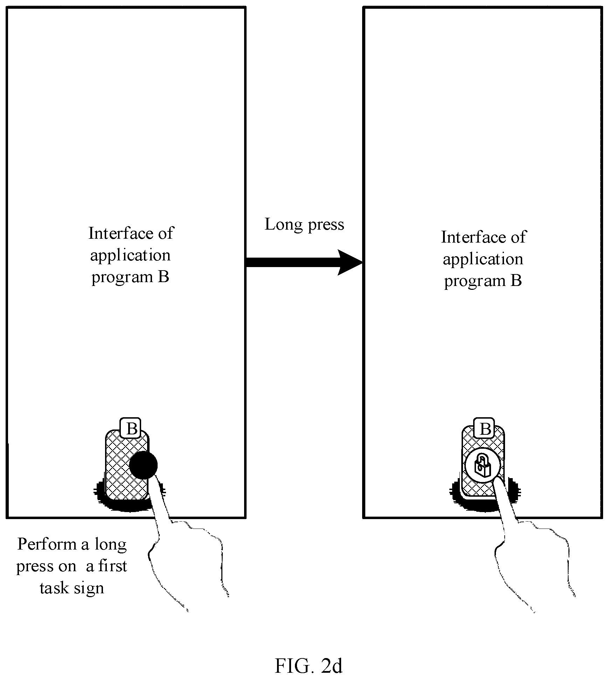

In specific implementation, the first input may be a touch input performed on the first user interface. For example, as shown in FIG. 2a, it is assumed that the first input is a touch input that slides from the lower left corner of the first user interface to the center of the first user interface, in response to the touch input, the first task window is displayed in a floating manner in the first user interface.

Certainly, the first input may alternatively be a hardware operation input such as a long press or a deep press on a hardware button, or a combination of touch input and hardware operation input. The first input is not limited to a specific type.

Furthermore, besides being displayed in a floating manner in the first user interface, the first task window may be displayed in any other manner, such as being displayed in a split-screen manner or full-screen manner. For ease of description, as shown in FIG. 2a, the first task window being displayed in a floating manner in the first user interface is used as an example for description in the following embodiments, without constituting specific limitations.

It should be noted that the task sign mentioned in this embodiment of this application may be a thumbnail of a user interface associated with the task sign, or may include an icon of an application program to which a user interface associated with the task sign belongs. For example, as shown in FIG. 2a, it is assumed that the first user interface 21 is an interface of application program A and the second user interface is an interface of application program B, the second task sign 23 in the first task window 22 may include a thumbnail of the second user interface and an application icon of application program B, and the first task sign 26 may include a thumbnail of the first user interface and an application icon of application program A.

It should be noted that "displaying a first task sign in the first task window, the first task sign being associated with the first user interface, where the first task window further includes a second task sign, the second task sign being associated with a second user interface" may be understood as follows: at least a task sign associated with a currently displayed user interface is displayed in the first task window, and the second task sign may be determined based on a user interface running in the background, another interface associated with the first user interface and preset by a user, and the like.

Optionally, the first task sign is a first window, content displayed in the window is the same as content on the first user interface, and the first window is used for maintaining a running state of the first user interface; and the second task sign is a second window, content displayed in the second window is the same as content on the second user interface, and the second window is used for maintaining a running state of the second user interface.

In this embodiment, the first window or second window displays the same content as the first user interface or the second user interface so that the first user interface and the second user interface may be maintained in the running state. In practical application, the display content of the first user interface and second user interface in the running state may change, and the change may be reflected in the first window or the second window, so that the first user interface and the second user interface are maintained in the running state.

Furthermore, in this embodiment, in a case that a user touches the second window from the first task window in the first user interface to display the second user interface, relevant data may be called from the second window to generate the display content on the second user interface. This avoids the problems of incapability to update the display content and incapability to obtain the latest display content in the process of triggering the display of the second user interface in a case that the second user interface is running in the background.

Step 104. Display the second user interface in a case that a second input performed on the second task sign has been received.

In specific implementation, the second input may include at least one of touch inputs such as tap, long press, and slide performed on the second task sign.

In an optional embodiment, the displaying the second user interface includes any one of the following:
displaying the second user interface in a full-screen manner;
displaying the first user interface and the second user interface in a split-screen manner; and
displaying the second user interface on the first user interface in a floating manner.

In specific implementation, the displaying the second user interface in a full-screen manner may be understood as changing a currently displayed interface from the first user interface to the second user interface.

The displaying the first user interface and the second user interface in a split-screen manner may be understood as combining the first user interface with the second user interface to form a split-screen interface to implement split-screen display. For example, the first user interface is displayed in the upper half of a display, and the second user interface is displayed in the lower half of the display. This allows a user to simultaneously view and edit the first user interface and the second user interface.

The displaying the second user interface on the first user interface in a floating manner may be understood as the first user interface still being displayed in a full-screen manner, with a small floating window displayed on top of the first user interface, and the second user interface being displayed in the small floating window. In this case, a user may perform operations such as dragging, zooming in, and zooming out the small floating window, so that in a case of the first user interface and the second user interface being simultaneously displayed, a user can adjust the position and size of the small floating window depending on the need of the user, so as to reduce interference of the small floating window with the user viewing or operating the first user interface.

In an optional embodiment, a display mode of the user interface associated with the task sign may be preset, so that when a user taps on a task sign, the user interface associated with that task sign can be displayed according to the preset display mode.

In another embodiment, in the process of generating the task sign, a display mode of the user interface associated with the task sign may be determined based on a selection operation of a user. Alternatively, different types of task signs may be generated for user interfaces in different display modes.

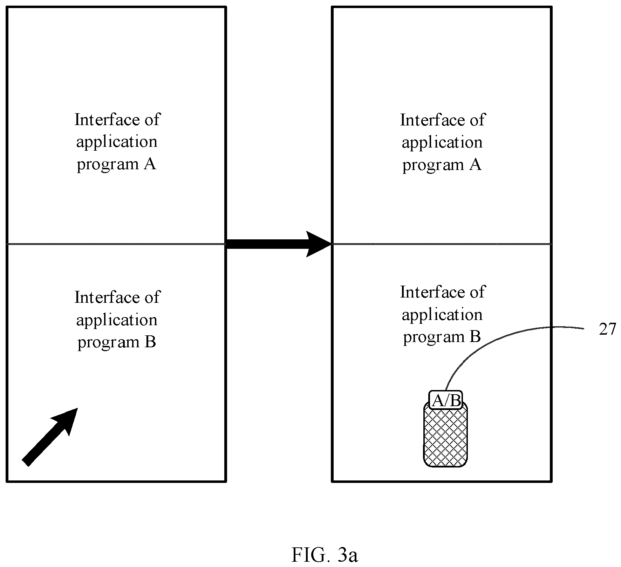

For example, in a case of generating a task sign for a split-screen interface, the task sign generated may be a split-screen task sign. In a case of generating a task sign for a full-screen interface, the task sign generated may be a full-screen task sign. In a case of generating a task sign for a floating interface, the generated task sign may be a floating task sign. The split-screen task sign, full-screen task sign, and floating task sign are different. For example, the second task sign 23 associated with the user interface displayed in a full-screen manner in the embodiment shown in FIG. 2a is different from the split-screen task sign 27 associated with the split-screen interface in the embodiment shown in FIG. 3a.

In this embodiment, the display mode of the second user interface associated with the second task sign may be made more diverse.

In a first optional embodiment, the second user interface and the first user interface include interfaces of different application programs. For example, the first user interface is an interface of a first application program, and the second user interface is an interface of a second application program. Certainly, in a case that split-screen interfaces or floating interfaces are supported, the first user interface or the second user interface may each include at least two application program interfaces, and the at least two application program interfaces in the first user interface are different from the at least two application program interfaces in the second user interface.

In this embodiment, an interface of another application program may be displayed in the first task window in the first user interface, allowing a user to conveniently view the interface of the another application program in a case that the user performs the second input on the second task sign associated with the interface of the another application program. This is different from the related art in which a user needs to exit a currently running application program interface, open an interface running in the background, select and start a task of another application program from the interface, and the like before switching from the currently displayed application program interface to the interface of the another application program.

Optionally, the user may pre-associate the second task sign with the first user interface.

For example, in a case that the second user interface and the first user interface are interfaces of different application programs:
before the displaying a first user interface, the method further includes:
displaying the first task window within the second user interface, where the first task window includes the second task sign in a case that the second user interface is displayed; and
canceling display of the first task window in a case that display of the second user interface is canceled.

In specific implementation, in a case of displaying the second user interface, display of the first task window in the second user interface may also be triggered through an input similar to the first input. In addition, at least the second task sign associated with the currently displayed second user interface is displayed in the first task window. In this way, within a preset time (for example, 5 minutes, 30 minutes, or 1 hour) since the second user interface and the first task window are closed, if the first task window is displayed in the first user interface, the second task sign that has been displayed in the first task window in the preset time and the first task sign associated with the currently displayed first user interface may be displayed in the first task window. Details are not described herein.

In this embodiment, the first task window may record a task sign that has been displayed in this task window in a preset time. In this way, in a case of displaying a user interface, task signs of other user interfaces that have been displayed in a short period of time may be checked through the task window in that user interface, so as to achieve convenient switching between user interfaces by performing an operation on these task signs.

Further, after the displaying the first task window within the second user interface but before the canceling display of the first task window, the method further includes:
receiving a third input performed by a user; and
in response to the third input, setting the second task sign to a locked state, where the first task window includes any task sign in the locked state.

In specific implementation, the third input may include at least one of touch inputs such as a long press input, a double-tap input, or a deep press input on the second task sign displayed in the first task window. With the third input, the second task sign may be set to a locked state.

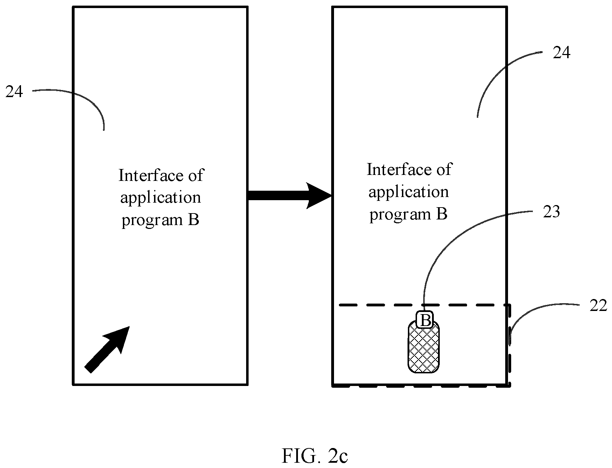

For example, as shown in FIG. 2c to FIG. 2d, it is assumed that the second user interface 24 is an interface of application program B. When the first input sliding from the lower left corner of the second user interface 24 to the middle of the second user interface 24 is received in the second user interface 24, the first task window 22 is displayed in the second user interface 24. In addition, the first task window 22 includes the second task sign 23 associated with the second user interface 24. Through a long press operation on the second task sign 23, the second task sign 23 can be set to a locked state. At this time, when a user opens the first task window 22 in the first user interface 21 as shown in FIG. 2a, the second task sign 23 associated with the second user interface 24 and the first task sign 26 associated with the first user interface 21 currently displayed are displayed in the first task window 22.

It should be noted that in this embodiment, a task sign associated with a currently displayed user interface may be displayed by default in the first task window. That is, in a case of displaying the first task window in the first user interface, the first task sign associated with the first user interface is displayed by default in the first task window. In a case of displaying the first task window in the second user interface, the second task sign associated with the second user interface is displayed by default in the first task window. If another user interface running in the background needs to be displayed in the first task window, a task sign associated with the another user interface needs to be set to a locked state in advance through the third input, so that the first task window always displays all task signs that are in a locked state.

It should be noted that after setting the second task sign to a locked state, the method further includes:
in a case that an unlock operation for the second task sign has been received, unlocking the second task sign.

The unlock operation may include one or more of touch inputs such as tap, long press, and a deep press performed on the second task sign in the locked state. After unlocking, the second task sign is no longer displayed in the task window of another application program.

In this embodiment, the task sign in the locked state may be displayed in the task window of any user interface. In this way, after the second task sign is set to a locked state, even if another user interface is displayed, the second task sign is displayed in a task window in the another user interface. This facilitates switching between different user interfaces by a user by performing the second input on the second task sign in the task window.

Certainly, in practical application, in addition to the method in which a user pre-associates the second task sign with the first user interface, the second task sign may also be a task sign generated by a device implementing the display method provided in this embodiment of this application in the first task window.

For example, it is assumed that application program A and application program B are two related application programs, a task sign associated with a running interface of application program B running in the background may be displayed in a task window of application program A. That application program A and application program B are two related application programs may be understood as follows: application program A and application program B are two similar application programs in terms of functionality, the probability that a user needs to use application program B while using application program A is higher than a preset probability (for example, 50%), a user pre-associates application program A with application program B, or the like.

Optionally, in implementation, the first task sign associated with the first user interface may alternatively be set to a locked state. For example, the first task sign associated with the first user interface is set to a locked state in the same way as setting the second task sign to a locked state. Alternatively, in a case that the second task sign has been set to a locked state and that the second input performed on the second task sign displayed in the first task window has been received, the first task sign associated with the first user interface is also set to a locked state.

In this way, in a case that the second input performed on the second task sign has been received, after the second user interface is displayed, the first task sign may also be displayed in the first task window in the second user interface.

For example, as shown in FIG. 2b, it is assumed that the first user interface 21 is an interface of application program A and that the second user interface 24 is an interface of application program B, the second task sign 23 associated with the second user interface 24 and the first task sign 26 associated with the first user interface 21 may be displayed in the first task window 22 in the first user interface 21. In addition, the second task sign 23 associated with the second user interface 24 and the first task sign 26 associated with the first user interface 21 may also be displayed in the first task window 22 in the second user interface 24.

In this embodiment, with the mutually associated first task sign and second task sign displayed in the task windows of two different user interfaces, a user can conveniently switch between interfaces of two different application programs.

It should be noted that in this embodiment of this application, task signs associated with interfaces of two different application programs being displayed in a task window is used as an example for description. However, in practical application, task signs associated with interfaces of three or even four different application programs may be displayed in one task window. For example, if task signs respectively corresponding to interfaces of application program C and application program D are both set to a locked state, task signs respectively corresponding to interfaces of application program C and application program D may further be displayed in one task window.

In a second optional embodiment, the second user interface and the first user interface include different interfaces of one application program.

In implementation, in a case that a user operates an application program and switches an interface within the application program, the following may be temporarily stored: user interface associated with the application program running in the background, or user interface that has been accessed within a preset time length (for example, the past half hour) and associated with the application program, user interface favorited by a user and associated with the application program, or a task label in one-to-one correspondence to the user interface stored is generated in the first task window.

In this embodiment, task signs associated with different interfaces of one application program are all displayed in the first task window so that a user can conveniently switch between different interfaces of one application program.

In a third optional embodiment, the second user interface and the first user interface include interfaces of one application program in different display modes.

In specific implementation, interface display modes may include full-screen display mode, split-screen display mode, and floating display mode.

The difference between this embodiment and the second optional embodiment is that in this embodiment, in addition to the user interface of the application program in a full-screen manner display mode, the user interface of the application program further includes:
an interface in split-screen display mode or floating display mode and including the user interface. In other words, the second task sign associated with the second user interface may be a full-screen interface, a split-screen interface, or a floating interface.

The split-screen interface may be as shown in FIG. 3a: two user interfaces (such as an interface of application program A and an interface of application program B) are respectively displayed in the split-screen interfaces in different display areas. In this case, performing the first input in the split-screen interface can trigger the display of a task window in the split-screen interface, and a split-screen task sign 27 associated with the split-screen interface currently displayed is displayed in the task window.

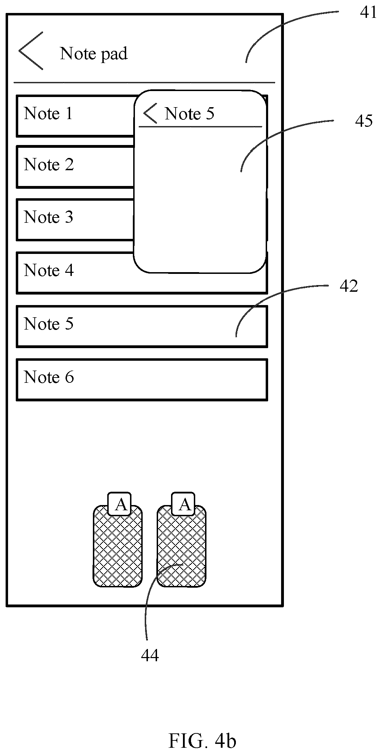

Additionally, the floating interface may be an interface in which a small floating window 45 is displayed on top of an underlying user interface 42, as shown in FIG. 4b.

For example, as shown in FIG. 3a, in a case that application program A has been opened, if an interface of application program A is combined with an interface of application program B in a split-screen mode to create a split-screen interface of application program A and application program B, a split-screen task sign 27 associated with the split-screen interface of application program A and application program B may be displayed in the task window of application program A (for example, if a target document of note application A is started and combined with browser application B in a split-screen mode, a split-screen task sign 27 associated with the split-screen interface of the target document of note application A and browser application B is generated in a task window of note application A).

Optionally, in a case that an application program supports multi-window operation, that is, simultaneous display of multiple different user interfaces of the application program, at least two task signs associated with the application program may be displayed in a task window of the application program.

Accordingly, by performing the second input on at least two task signs associated with one application program, at least two user interfaces of this application program may be simultaneously displayed.

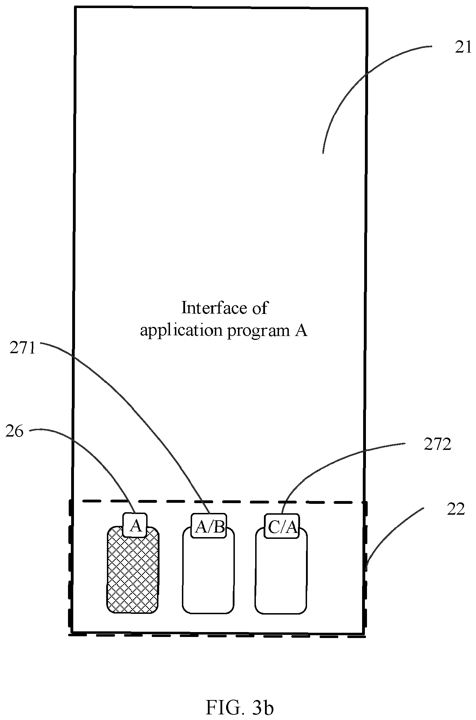

For example, it is assumed that application program A supports multi-window operation and that a split-screen combination of application program A and application program B and a split-screen combination of application program A and application program C have been created. In this case, as shown in FIG. 3b, the following may be simultaneously displayed by a user in a task window of application program A: first task sign 26 associated with the full-screen display interface of application program A, first split-screen task sign 271 associated with the split-screen interface of application program A and application program B, and second split-screen task sign 272 associated with the split-screen interface of application program A and application program C.

In this embodiment, task signs associated with interfaces in different display modes may be displayed distinctly in a task window, allowing a user to perform an operation on the split-screen task sign (task sign associated with the split-screen interface) to trigger the display of the split-screen interface, or perform an operation on the floating task sign (task sign associated with the floating interface) to trigger the display of the floating interface. This can greatly simplify the process of displaying split-screen interfaces or floating interfaces.

In an optional embodiment, in a case that the second user interface and the first user interface include different interfaces of a target application program, or the second user interface and the first user interface include interfaces of a target application program in different display modes, the second task sign is associated with a target interface of the target application program, where
the target interface includes an interface of the target application program running in the background or an interface of the target application program displayed within a preset time.

In specific implementation, the target application program can support the aforementioned multi-window operation, so that in a case that the first user interface of the target application program has been displayed, the target application program may further include an interface running in the background.

Furthermore, in implementation, during operating the target application program by a user, switching between multiple interfaces of the target application program is possible. In this case, the first task window can store a task sign that is associated with the interface of the target application program and that has been displayed in a past preset time (for example, 30 minutes or 5 minutes).

It should be noted that in addition to the interface of the target application program, the target interface may further include a split-screen interface or floating interface that includes the interface of the target application program and an interface of another application program. This is not specifically limited herein.

In this implementation, task signs of multiple user interfaces associated with one application program can be displayed, allowing a user to switch between different interfaces associated with this application program by performing an operation on the task signs.

In an optional embodiment, the task sign corresponding to the user interface of the currently displayed interface can be differentiated from another task sign.

For example, as shown in FIG. 3b, the first task sign 26 associated with the full-screen display interface of the currently displayed application program A can be highlighted to differentiate it from the first split-screen task sign 271 and the second split-screen task sign 272.

In implementation, the task sign may alternatively be a task sign manually created by a user.

In an optional embodiment, after the in response to the first input, displaying a first task window, the method further includes:
in a case that a fourth input performed on a first data object on the first user interface has been received, creating a task sign corresponding to the first data object within the first task window.

The first data object may include at least one of the following: link entry, file, and attachment.

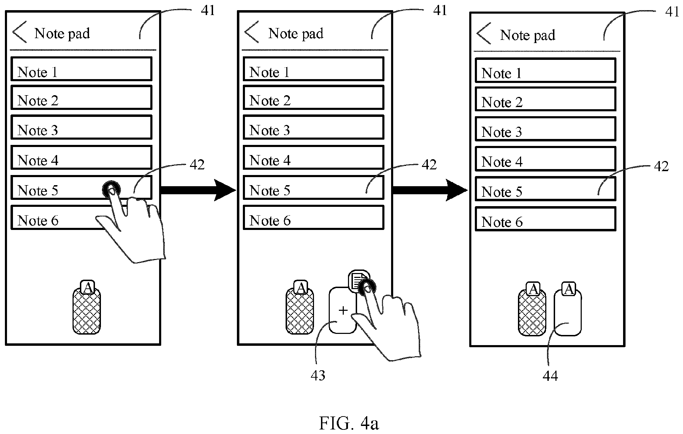

In specific implementation, the fourth input may include at least one of touch inputs such as tap, long press, a deep press, and dragging performed on the first data object. For example, as shown in FIG. 4a, it is assumed that the first user interface is a directory interface 41 of a note pad application program, and the directory interface 41 displays list options 42 of multiple notes. When the user drags list option 42 of note 5, add widget 43 is displayed within the first task window 22. In this case, a user can continue dragging the list option 42 so that the list option 42 partially overlaps with the add widget 43, to trigger the creation of a task sign 44 corresponding to note 5 within the first task window 22. In other words, in this example, the first input may include a dragging input that drags the first data object to partially overlap with the add widget 43 displayed within the first task window 22.

It should be noted that after creating the task sign corresponding to the first data object within the first task window, a user tapping the newly created task sign can trigger the display of data content associated with the first data object on the display.

For example, if the first data object is a link entry, a user tapping the newly created task sign can trigger the display of data content like a web page or file corresponding to the link entry on the display. If the first data object is a file, a user tapping the newly created task sign can open the file to display the content of the file. If the first data object is an attachment, a user tapping the newly created task sign can open the attachment to display the content of the attachment, and so on.

In implementation, the data content associated with the first data object may be displayed in a small floating window.

For example, after a user taps a task sign 44 corresponding to note 5 as shown in FIG. 4a, the note content of note 5 can be displayed in a small floating window 45, and the previously displayed directory interface 41 of the note pad application program is displayed underneath the small floating window 45. This allows a user to simultaneously view or operate the directory interface 41 and the note content of note 5. For example, a user can simultaneously view the note content of note 1 and note content of note 5 by tapping the list option of note 1 in the directory interface 41.

In this embodiment, creation of a task sign associated with a small floating window has been implemented so that a user can conveniently view or operate both the currently displayed user interface and the data content associated with the first data obj ect.

Certainly, in a case that a user has created the task sign corresponding to the newly created first data object, in addition to being displayed in a small floating window, the data content associated with the first data object can also be displayed in a form of split-screen combination, full-screen display, or the like. This is not specifically limited herein.

In an optional embodiment, in a case that a target application program has at least two task signs, the in response to the first input, displaying a first task window includes:
in response to the first input, displaying the first task window and displaying a first aggregated task sign associated with the target application program in the first task window; and
in a case that a fifth input performed on the first aggregated task sign has been received, expanding the at least two task signs associated with the target application program.

In specific implementation, the fifth input may include at least one of touch inputs such as tap, long press, and a deep press performed on the first aggregated task sign, and the first aggregated task sign may include a sign of the target application program.

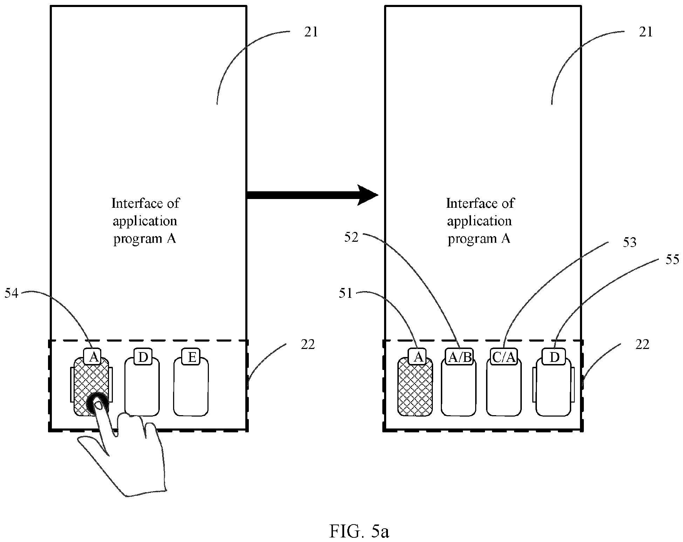

For example, as shown in FIG. 5a, it is assumed that the target application program is application program A, and the task window 22 includes three task signs associated with application program A (which are a full-screen task sign 51 associated with the full-screen interface of application program A, a first split-screen task sign 52 associated with the split-screen interface of application program A and application program B, and a second split-screen task sign 53 associated with the split-screen interface of application program C and application program A, respectively). In a case of opening the task window 22 within the interface of application program A, the three task signs associated with application program A can be aggregated for display, namely, displaying the first aggregated task sign 54 of application program A, where the first aggregated task sign 54 can include the application icon of application program A.

In specific implementation, the target application program may be any application program corresponding to a user interface associated with any task sign displayed in the task window. For example, if the first task window includes the third task sign and the third task sign is a split-screen interface of interface a of application A and interface b of application B, application programs corresponding to the third task sign are application A and application B. In a case that one application program includes multiple task signs, aggregating the multiple task signs for display can avoid the defect that the multiple task signs occupy a large part of the display area in the first task window, while such occupying makes a user cannot conveniently view and operate another task sign.

In this implementation, multiple task signs of one application program can be aggregated for display, to reduce the number of task signs displayed in the first task window. After a user touches an aggregated task sign of a desired application program, every task sign of this application program can be expanded for display. This simplifies the complexity of a user selecting a desired task sign within the first task window.

Optionally, in a case that the first task window includes task signs corresponding to N application programs, the expanding the at least two task signs associated with the target application program includes:
expanding the at least two task signs associated with the target application program and displaying a second aggregated task sign, where the second aggregated task sign is associated with task signs of N-1 application programs in the first task window other than the target application program, N being an integer greater than 2; and
the method further includes:
   in a case that a sixth input performed on the second aggregated task sign has been received, displaying the first aggregated task sign in the first task window.

In specific implementation, the second aggregated task sign may be understood as a sign obtained by aggregating the first aggregated task signs of the N-1 application programs again. Certainly, in a case that the N-1 application programs each have only one task sign, the second aggregated task sign can be understood as a sign obtained by aggregating task signs of the N-1 application programs.

The difference between this embodiment and the previous embodiment lies in that in a case that the fifth input performed on the first aggregated task sign has been received, not only the at least two task signs associated with the target application program are expanded and displayed, but also the task signs of the N-1 application programs are aggregated and displayed. This further reduces the number of task signs displayed in the task window, making it more convenient for a user to find a target task sign of a target application program that the user wants to operate.

For example, as shown in FIG. 5a, if a user taps the first aggregated task sign 54, three task signs associated with application program A can all be displayed and aggregated with a task sign of another application program (such as application program D and application program E shown in FIG. 5a) for display, that is, displaying the second aggregated task sign 55.

In addition, after displaying the second aggregated task sign, if a user performs the sixth input on the second aggregated task sign, the first aggregated task sign is displayed again, that is, switching from the interface in the right part of FIG. 5a to the interface in the left part of FIG. 5a.

The sixth input may include at least one of touch inputs such as tap, long press, and a deep press. This is not specifically limited herein.

In this embodiment, in a case of expanding the multiple task signs of the target application program, the sixth input may be performed on the second aggregated task sign to quickly return to the task window displaying the first aggregated task sign. This allows a user to view and operate a task sign of another application program.

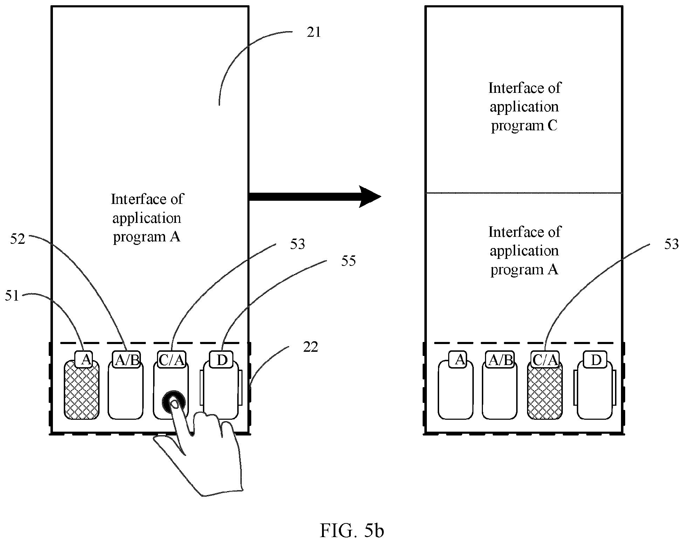

Certainly, in a case that the second aggregated task sign has been displayed, if a user performs the second input on a first task sign associated with the target application program, the user interface associated with the first task sign can be displayed. For example, as shown in FIG. 5b, it is assumed that the target application program is application program A, and application program A includes three task signs, which are a full-screen task sign 51 associated with the full-screen interface of application program A, a first split-screen task sign 52 associated with the split-screen interface of application program A and application program B, and a second split-screen task sign 53 associated with the split-screen interface of application program C and application program A, respectively. In this case, in a case that the second aggregated task sign 55 has been displayed, if a user taps the second split-screen task sign 53, a split-screen interface of application program C and application program A.

In the embodiments of this application, the first user interface is displayed; the first input performed by a user is received; in response to the first input, the first task window is displayed and the first task sign is displayed in the first task window, the first task sign being associated with the first user interface, where the first task window further includes the second task sign, the second task sign being associated with the second user interface; and the second user interface is displayed in a case that the second input performed on the second task sign has been received. In this way, in a case that the first user interface is displayed, the second user interface can be conveniently viewed by performing an operation on the second task sign in the first task window, simplifying the process of waking up the second user interface in a case that the first user interface is displayed.

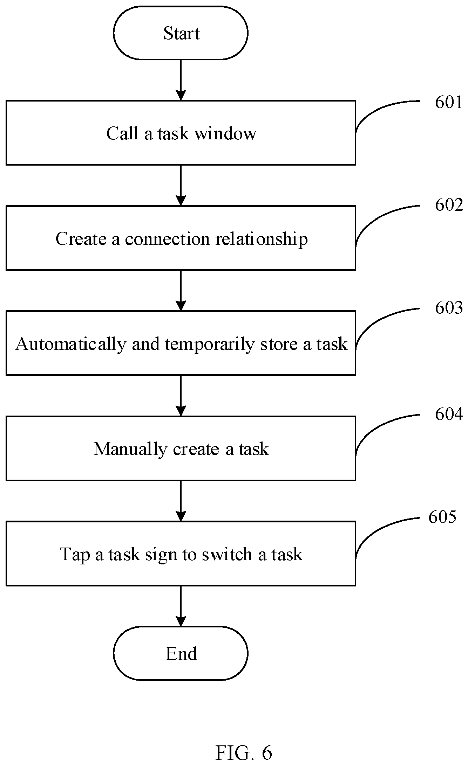

For ease of understanding the display method provided in the embodiments of this application, the flowchart of the display method shown in FIG. 6 is used as an example to describe the display method provided in the embodiments of this application.

As shown in FIG. 6, another display method provided in the embodiments of this application may include the following steps.

Step 601. Call a task window.

This step is similar to step 102 in the method embodiment shown in FIG. 1 and therefore is not described in detail herein.

Step 602. Create a connection relationship.

In this step, creating a connection relationship can be understood as follows: In the embodiments shown in FIG. 2a to FIG. 2d, the task sign of application program B is set to a locked state. This allows the task sign of application program B to be displayed when multiple task windows are opened in the interface of application program A. Thus, a connection relationship between the task sign of application program B and application program A is created.

Step 603. Automatically and temperately store a task.

In this step, the automatically and temperately storing a task can be understood as follows: A task running in the background or a user interface that has been displayed within a preset time is temperately stored, so as to generate a task sign corresponding to the temperately stored task or user interface within the currently displayed task window. This is similar to the embodiment shown in FIG. 3b and therefore is not described in detail herein.

Step 604. Manually create a task.

This step can be understood as the process of creating a task sign within a task window, as shown in the embodiments of FIG. 4a and FIG. 4b, and therefore is not described in detail herein.

Step 605. Tap a task sign to switch a task.

This step can be understood as tapping a task sign to display a user interface associated with the task sign, thereby switching from the task associated with the task sign to the foreground running state.

It should be noted that the embodiment of FIG. 6 is only an example of the display method provided in this application. In practical application, only some of the steps from step 601 to step 605 may be performed. For example, step 602 is not performed. This can also achieve the following objectives: simplifying the process of waking up the second user interface in a case that the first user interface has been displayed. It is not limited herein that the display method provided in this application must include all the steps shown in the method embodiment shown in FIG. 6.

It should be noted that for the display apparatus provided in the embodiments of this application, the execution body may be a display apparatus, or a control module for executing the display method in the display apparatus. In the embodiments of this application, the display method provided in the embodiments of this application is described by using the display method being executed by a display apparatus as an example.

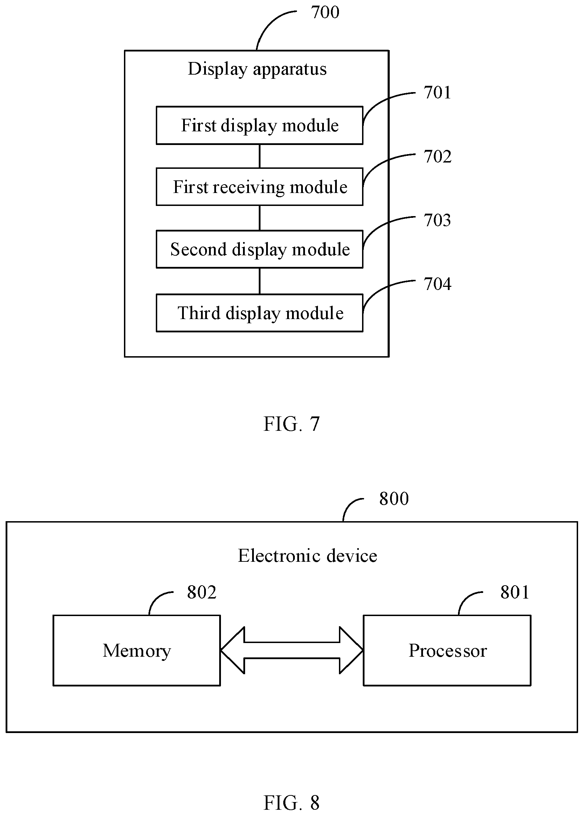

Referring to FIG. 7, a display apparatus 700 according to an embodiment of this application may include:
a first display module 701 configured to display a first user interface;
a first receiving module 702, configured to receive a first input by a user;
a second display module 703 configured to: in response to the first input, display a first task window and display a first task sign in the first task window, the first task sign being associated with the first user interface, where the first task window further includes a second task sign, the second task sign being associated with a second user interface; and
a third display module 704 configured to display the second user interface in a case that a second input performed on the second task sign has been received.

Optionally, the first task sign is a first window, content displayed in the window is the same as content on the first user interface, and the first window is used for maintaining a running state of the first user interface; and the second task sign is a second window, content displayed in the second window is the same as content on the second user interface, and the second window is used for maintaining a running state of the second user interface.

Optionally, the second user interface and the first user interface include interfaces of different application programs, the second user interface and the first user interface include different interfaces of one application program, or the second user interface and the first user interface include interfaces of one application program in different display modes.

Optionally, in a case that the second user interface and the first user interface include interfaces of different application programs:
the display apparatus 700 further includes:
a fourth display module configured to display the first task window within the second user interface, where the first task window includes the second task sign in a case that the second user interface is displayed; and
a display canceling module configured to cancel display of the first task window in a case that display of the second user interface is canceled.

Optionally, the display apparatus 700 further includes:
a second receiving module, configured to receive a third input performed by a user; and
a setting module configured to: in response to the third input, set the second task sign to a locked state, where the first task window includes any task sign in the locked state.

Optionally, the display apparatus 700 further includes:
a creating module configured to: in a case that a fourth input performed on a first data object on the first user interface has been received, create a task sign corresponding to the first data object within the first task window.

Optionally, the first data object includes at least one of the following: link entry, file, and attachment.

Optionally, the third display module 704 is specifically configured to perform any one of the following:
displaying the second user interface in a full-screen manner;
displaying the first user interface and the second user interface in a split-screen manner; and
displaying the second user interface on the first user interface in a floating manner.

Optionally, in a case that the second user interface and the first user interface include different interfaces of a target application program, or the second user interface and the first user interface include interfaces of a target application program in different display modes, the second task sign is associated with a target interface of the target application program, where
the target interface includes an interface of the target application program running in the background or an interface of the target application program displayed within a preset time.

Optionally, in a case that a target application program includes at least two task signs, the second display module 703 includes:
a first display unit configured to: in a case that the first input has been improved, display the first task window and display a first aggregated task sign associated with the target application program in the first task window; and
a second display unit configured to: in a case that a fifth input performed on the first aggregated task sign has been received, expand the at least two task signs associated with the target application program.

Optionally, in a case that the first task window includes task signs corresponding to N application programs, the second display unit is specifically configured to:
expand the at least two task signs associated with the target application program and display a second aggregated task sign, where the second aggregated task sign is associated with task signs of N-1 application programs in the first task window other than the target application program, N being an integer greater than 2; and
the display apparatus 700 further includes:
   a fifth display module configured to: in a case that a sixth input performed on the second aggregated task sign has been received, display the first aggregated task sign in the first task window and expand the task signs of the N-1 application programs.

The display apparatus 700 provided in this embodiment of this application can implement the processes of the method embodiment shown in FIG. 1 or 6, with the same technical effects achieved. To avoid repetition, details are not described herein again.

The display apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a network attached storage (Network Attached Storage, NAS), a personal computer (personal computer, PC), a television (television, TV), a teller machine, a self-service machine, or the like. This is not specifically limited in the embodiments of this application.

The display apparatus in this embodiment of this application may be an apparatus having an operating system. The operating system may be an android (Android) operating system, an iOS operating system, or another possible operating system. This is not specifically limited in the embodiments of this application.

Optionally, as shown in FIG. 8, an embodiment of this application further provides an electronic device 800 including a processor 801, a memory 802, and a program or instructions stored in the memory 802 and capable of running on the processor 801, where when the program or instructions are executed by the processor 801, the processes of the method embodiment in FIG. 1 or FIG. 6 are implemented, with the same technical effects achieved. To avoid repetition, details are not described herein again.

It should be noted that the electronic device in this embodiment of this application includes the foregoing mobile electronic device and non-mobile electronic device.

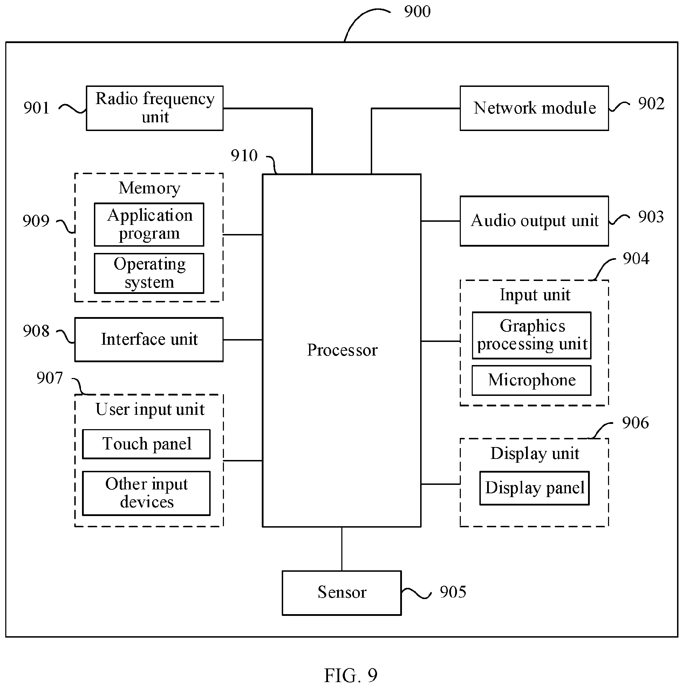

FIG. 9 is a schematic diagram of a hardware structure of an electronic device according to an embodiment of this application.

The electronic device 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

It can be understood by those skilled in the art that the electronic device 900 may further include a power supply (for example, a battery) supplying power to the components. The power supply may be logically connected to the processor 910 via a power management system, so that functions such as charge management, discharge management, and power consumption management are implemented via the power management system. The structure of the electronic device shown in FIG. 9 does not constitute a limitation on the electronic device. The electronic device may include more or fewer components than shown in the drawing, or combine some of the components, or arrange the components differently. Details are not described herein.

The display unit 906 is configured to display a first user interface.

The user input unit 907 is configured to receive a first input performed by a user.

The display unit 906 is further configured to: in response to the first input, display a first task window and display a first task sign in the first task window, the first task sign being associated with the first user interface, where the first task window further includes a second task sign, the second task sign being associated with a second user interface.

The display unit 906 is further configured to display the second user interface in a case that the user input unit 907 has received a second input performed on the second task sign.

Optionally, the first task sign is a first window, content displayed in the window is the same as content on the first user interface, and the first window is used for maintaining a running state of the first user interface; and the second task sign is a second window, content displayed in the second window is the same as content on the second user interface, and the second window is used for maintaining a running state of the second user interface.

Optionally, the second user interface and the first user interface include interfaces of different application programs, the second user interface and the first user interface include different interfaces of one application program, or the second user interface and the first user interface include interfaces of one application program in different display modes.

Optionally, in a case that the second user interface and the first user interface include interfaces of different application programs:
before the display unit 906 performs the step of displaying a first user interface:
the display unit 906 is further configured to display the first task window within the second user interface, where the first task window includes the second task sign in a case that the second user interface is displayed; and
the display unit 906 is further configured to cancel display of the first task window in a case that display of the second user interface is canceled.

Optionally, after the display unit 906 performs the displaying the first task window within the second user interface but before the display unit 906 performs the canceling display of the first task window,
the user input unit 907 is further configured to receive a third input performed by a user; and
the processor 910 is configured to: in response to the third input, set the second task sign to a locked state, where the first task window includes any task sign in the locked state.

Optionally, after the display unit 906 displays the first task window in response to the first input, the processor 910 is further configured to:
in a case that the user input unit 907 has received a fourth input performed on a first data object on the first user interface, create a task sign corresponding to the first data object within the first task window.

Optionally, the first data object includes at least one of the following: link entry, file, and attachment.

Optionally, the display unit 906 displaying the second user interface includes any one of the following:
displaying the second user interface in a full-screen manner;
displaying the first user interface and the second user interface in a split-screen manner; and
displaying the second user interface on the first user interface in a floating manner.

Optionally, in a case that the second user interface and the first user interface include different interfaces of a target application program, or the second user interface and the first user interface include interfaces of a target application program in different display modes, the first task sign is associated with a target interface of the target application program, where
the target interface includes an interface of the target application program running in the background or an interface of the target application program displayed within a preset time.

Optionally, in a case that a target application program has at least two task signs, the in response to the first input, the display unit 906 displaying a first task window includes:
in response to the first input, displaying the first task window and displaying a first aggregated task sign associated with the target application program in the first task window; and
in a case that the user input unit 907 has received a fifth input performed on the first aggregated task sign, expanding the at least two task signs associated with the target application program.

Optionally, in a case that the first task window includes task signs corresponding to N application programs, the display unit 906 expanding the at least two task signs associated with the target application program includes:
expanding the at least two task signs associated with the target application program and displaying a second aggregated task sign, where the second aggregated task sign is associated with task signs of N-1 application programs in the first task window other than the target application program, N being an integer greater than 2.

The display unit 906 is further configured to:
in a case that the user input unit 907 has received a sixth input performed on the second aggregated task sign, display the first aggregated task sign in the first task window and expand the task signs of the N-1 application programs.

The electronic device 900 provided in this embodiment of this application can implement the processes of the method embodiment shown in FIG. 1 or 6, with the same technical effects achieved. Details are not described herein again.

It should be understood that in this embodiment of this application, the input unit 904 may include a graphics processing unit (Graphics Processing Unit, GPU) and a microphone. The graphics processing unit processes image data of a static picture or a video that is obtained by an image capture apparatus (for example, a camera) in a video capture mode or an image capture mode. The display unit 906 may include a display panel, and the display panel may be configured in a form of a liquid crystal display, an organic light-emitting diode, or the like. The user input unit 907 includes a touch panel and other input devices. The touch panel is also referred to as a touchscreen. The touch panel may include two parts: a touch detection apparatus and a touch controller. The other input devices may include but are not limited to a physical keyboard, a functional button (such as a volume control button or a power on/off button), a trackball, a mouse, and a joystick. Details are not described herein. The memory 909 may be configured to store software programs and various data including but not limited to application programs and operating systems. The processor 910 may integrate an application processor and a modem processor. The application processor mainly processes the operating system, a user interface, an application program, and the like. The modem processor mainly processes wireless communication. It can be understood that the modem processor may alternatively be not integrated in the processor 910.

An embodiment of this application further provides a readable storage medium. The readable storage medium stores a program or instructions. When the program or instructions are executed by a processor, the processes of the method embodiment in FIG. 1 or FIG. 6 are implemented, with the same technical effects achieved. To avoid repetition, details are not described herein again.

The processor is the processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the method embodiment in FIG. 1 or 6, with the same technical effects achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program product, where the computer program product is stored in a non-transitory storage medium. When the computer program product is executed by at least one processor, the processes of the foregoing method embodiment in FIG. 1 or 6 are implemented, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is an example embodiment. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A display method, comprising:
displaying a first user interface;
receiving a first input performed by a user;
in response to the first input, displaying a first task window and displaying a first task sign in the first task window, the first task sign being associated with the first user interface, wherein the first task window further comprises a second task sign, the second task sign being associated with a second user interface; and
displaying the second user interface in a case that a second input performed on the second task sign has been received.

2. The method according to claim 1, wherein the first task sign is a first window, content displayed in the window is the same as content on the first user interface, and the first window is used for maintaining a running state of the first user interface; and the second task sign is a second window, content displayed in the second window is the same as content on the second user interface, and the second window is used for maintaining a running state of the second user interface.

3. The method according to claim 1, wherein the second user interface and the first user interface comprise interfaces of different application programs, the second user interface and the first user interface comprise different interfaces of one application program, or the second user interface and the first user interface comprise interfaces of one application program in different display modes.

4. The method according to claim 3, wherein in a case that the second user interface and the first user interface comprise interfaces of different application programs:
before the displaying a first user interface, the method further comprises:
displaying the first task window within the second user interface, wherein the first task window comprises the second task sign in a case that the second user interface is displayed; and
canceling display of the first task window in a case that display of the second user interface is canceled.

5. The method according to claim 4, wherein after the displaying the first task window within the second user interface but before the canceling display of the first task window, the method further comprises:
receiving a third input performed by a user; and
in response to the third input, setting the second task sign to a locked state, wherein the first task window comprises any task sign in the locked state.

6. The method according to claim 3, wherein after the in response to the first input, displaying a first task window, the method further comprises:
in a case that a fourth input performed on a first data object on the first user interface has been received, creating a task sign corresponding to the first data object within the first task window.

7. The method according to claim 1, wherein in a case that the second user interface and the first user interface comprise different interfaces of a target application program, or the second user interface and the first user interface comprise interfaces of a target application program in different display modes, the second task sign is associated with a target interface of the target application program, wherein
the target interface comprises an interface of the target application program running in the background or an interface of the target application program displayed within a preset time.

8. The method according to claim 1, wherein in a case that a target application program has at least two task signs, the in response to the first input, displaying a first task window comprises:
in response to the first input, displaying the first task window and displaying a first aggregated task sign associated with the target application program in the first task window; and
in a case that a fifth input performed on the first aggregated task sign has been received, expanding the at least two task signs associated with the target application program.

9. The method according to claim 8, wherein in a case that the first task window comprises task signs corresponding to N application programs, the expanding the at least two task signs associated with the target application program comprises:
expanding the at least two task signs associated with the target application program and displaying a second aggregated task sign, wherein the second aggregated task sign is associated with task signs of N-1 application programs in the first task window other than the target application program, N being an integer greater than 2; and
the method further comprises:
in a case that a sixth input performed on the second aggregated task sign has been received, displaying the first aggregated task sign in the first task window and expanding the task signs of the N-1 application programs.

10. A display apparatus, comprising:
a first display module configured to display a first user interface;
a first receiving module configured to receive a first input performed by a user;
a second display module configured to: in response to the first input, display a first task window and display a first task sign in the first task window, the first task sign being associated with the first user interface, wherein the first task window further comprises a second task sign, the second task sign being associated with a second user interface; and
a third display module configured to display the second user interface in a case that a second input performed on the second task sign has been received.

11. The apparatus according to claim 10, wherein the first task sign is a first window, content displayed in the window is the same as content on the first user interface, and the first window is used for maintaining a running state of the first user interface; and the second task sign is a second window, content displayed in the second window is the same as content on the second user interface, and the second window is used for maintaining a running state of the second user interface.

12. The apparatus according to claim 10, wherein the second user interface and the first user interface comprise interfaces of different application programs, the second user interface and the first user interface comprise different interfaces of one application program, or the second user interface and the first user interface comprise interfaces of one application program in different display modes.

13. The apparatus according to claim 12, wherein in a case that the second user interface and the first user interface comprise interfaces of different application programs:
the apparatus further comprises:
a fourth display module configured to display the first task window within the second user interface, wherein the first task window comprises the second task sign in a case that the second user interface is displayed; and
a display canceling module configured to cancel display of the first task window in a case that display of the second user interface is canceled.

14. The apparatus according to claim 13, further comprising:
a second receiving module, configured to receive a third input performed by a user; and
a setting module configured to: in response to the third input, set the second task sign to a locked state, wherein the first task window comprises any task sign in the locked state.

15. The apparatus according to claim 14, further comprising:
a creating module configured to: in a case that a fourth input performed on a first data object on the first user interface has been received, create a task sign corresponding to the first data object within the first task window.

16. The apparatus according to claim 10, wherein in a case that the second user interface and the first user interface comprise different interfaces of a target application program, or the second user interface and the first user interface comprise interfaces of a target application program in different display modes, the second task sign is associated with a target interface of the target application program, wherein
the target interface comprises an interface of the target application program running in the background or an interface of the target application program displayed within a preset time.

17. The apparatus according to claim 10, wherein in a case that a target application program has at least two task signs, the second display module comprises:
a first display unit configured to: in response to the first input, display the first task window and display a first aggregated task sign associated with the target application program in the first task window; and
a second display unit configured to: in a case that a fifth input performed on the first aggregated task sign has been received, expand the at least two task signs associated with the target application program.

18. The apparatus according to claim 17, wherein in a case that the first task window comprises task signs corresponding to N application programs, the second display unit is specifically configured to:
expand the at least two task signs associated with the target application program and display a second aggregated task sign, wherein the second aggregated task sign is associated with task signs of N-1 application programs in the first task window other than the target application program, N being an integer greater than 2; and
the apparatus further comprises:
a fifth display module configured to: in a case that a sixth input performed on the second aggregated task sign has been received, display the first aggregated task sign in the first task window and expand the task signs of the N-1 application programs.

19. An electronic device, comprising a processor, a memory, and a program or instructions stored in the memory and capable of running on the processor, wherein when the program or instructions are executed by the processor, the steps of the display method according to any one of claims 1 to 9 are implemented.

20. A readable storage medium, wherein the readable storage medium stores a program or instructions, and when the program or instructions are executed by a processor, the steps of the display method according to any one of claims 1 to 9 are implemented.

21. A chip, comprising a processor and a communication interface, wherein the communication interface is coupled to the processor, and the processor is configured to run a program or instructions so as to implement the steps of the display method according to any one of claims 1 to 9.

22. A computer program product, wherein the computer program product is stored in a non-transient storage medium, and the computer program product is executed by at least one processor so as to implement the steps of the display method according to any one of claims 1 to 9.

23. An electronic device configured to perform the steps of the display method according to any one of claims 1 to 9.
